# EUROPÄISCHE PATENTSCHRIFT

(11) **EP 0 765 580 B1**
(45) Veröffentlichungstag und Bekanntmachung des Hinweises auf die Patenterteilung: **11.11.1998**
(21) Anmeldenummer: 95920783.8
(22) Anmeldetag: 14.06.1995
(51) Int. Cl.: H04Q 3/545

(54) **KOMMUNIKATIONSVERMITTLUNGSSYSTEM MIT EINEM LEISTUNGSMERKMALSYSTEM UND EINEM BASISVERMITTLUNGSSYSTEM**
COMMUNICATIONS SYSTEM WITH A FACILITY SYSTEM AND A BASE COMMUNICATIONS SYSTEM
SYSTEME DE COMMUNICATIONS AVEC UN SYSTEME DE COMPLEMENTS DE SERVICE ET UN SYSTEME DE COMMUNICATIONS DE BASE

(30) Priorität: 15.06.1994 DE 4420886
(43) Veröffentlichungstag der Anmeldung: 02.04.1997
(73) Patentinhaber: SIEMENS AKTIENGESELLSCHAFT, 80333 München (DE)
(72) Erfinder: FRITSCHE, Norbert, D-80809 München (DE)
(86) Internationale Anmeldenummer: DE9500764
(87) Internationale Veröffentlichungsnummer: WO9534999

(56) Entgegenhaltungen:
- ELECTRONICS AND COMMUNICATIONS IN JAPAN, Bd. 74, Nr. 4, April 1991 NEW YORK US, Seiten 1-11, XP 000262802 KONDO ET AL. 'Hierarchical service control scheme for Intelligent Network services'
- INTERNATIONAL SWITCHING SYMPOSIUM, SESSION B5, PAPER 2, Bd. 2, 25.Oktober 1992 YOKOHAMA JP, Seiten 39-42, XP 000429939 HANDLER 'Network of the future'
- INTERNATIONAL CONFERENCE ON COMMUNICATIONS, SESSION 21, PAPER 3, Bd. 2, 23.Juni 1991 DENVER US, Seiten 632-636, XP 000269575 RAMANI ET AL. 'Placement of feature management functionality in IN'
- ANNUAL REVIEW OF COMMUNICATIONS, Bd. 46, 1992 - 1993 CHICAGO US, Seiten 496-505, XP 000321962 BUYUKDURA ET AL. 'AIN evolution strategies/alternatives'

## Beschreibung

Die Erfindung betrifft ein Kommunikationsvermittlungssystem nach dem Oberbegriff des Patentanspruches 1. Insbesondere betrifft sie ein Vermittlungssystem, bestehend aus einem Leistungsmerkmalsystem und einem Basisvermittlungssystem.

Heutige Vermittlungssysteme unterstützen eine Vielzahl von Leistungsmerkmalen. Dies sind Telekommunikationszusatzdienste, wie z. B. Rufumleitung, Konferenzschaltung, Rückfrage, Halten, etc. Leistungsmerkmale sind in prozessorgesteuerten Vermittlungsanlagen innerhalb der Vermittlungssteuerabläufe realisiert. Diese Vermittlungssteuerabläufe, auch Vermittlungs-Software genannt, beinhalten die Rufsteuerung sowie die Leistungsmerkmale. Hierbei sind die Leistungsmerkmale mit der Rufsteuerung sowie untereinander verwoben. Dies führt zu einer hohen Software-Komplexität, wodurch die Softwarestruktur bezüglich der Einführung neuerer Leistungsmerkmale unflexibel wird. Um die dadurch bedingten langen Einführungszeiten für neue Leistungsmerkmale zu verkürzen, ist überlegt worden, die bisher voneinander abhängigen Teile der Steuerabläufe voneinander getrennt in eigenständigen Modulen zu realisieren, die jeweils eine feste Schnittstelle nach außen besitzen. Ansätze zur Trennung der Leistungsmerkmalsteuerung von der Vermittlungssteuerung werden im Rahmen der sich mit intelligenten Netzen beschäftigenden Standardisierungsvorgänge "Intelligent Network" bei ITU-T SG 11 verfolgt. Siehe hierzu die Richtlinien des CCITT: "New Recommendation Q.1214, Distributed Functional Plane for Intelligent Network CS-1, COM XI-R212-E, Seiten 7 bis 69 sowie Anlageseiten 7 bis 9.

Durch Entkopplung der Leistungsmerkmalsteuerung von der Vermittlungssteuerung, die hierbei auf ihre Grundfunktionalität reduziert wird, entsteht eine sauber strukturierte Vermittlungsarchitektur. Diese ist sehr modular aufgebaut und erlaubt die schnelle Einführung neuer Leistungsmerkmale. Außerdem wird durch die Trennung der Leistungsmerkmale eine von den Leistungsmerkmalen und der Rufsteuerung unabhängige Entwicklung ermöglicht.

Eine solche Struktur teilt ein Vermittlungssystem bzw. die Vermittlungs-Software in ein Basisvermittlungssystem und ein Leistungsmerkmalsystem. Hauptbestandteile eines Basisvermittlungssystems sind eine Rufsteuerung, eine Datenbasis und eine Vielzahl von Leistungsmerkmalsteuerbausteinen. Die Rufsteuerung wird auf ihre grundlegenden Aufgaben, den Auf- und Abbau von Verbindungen bzw. Rufen, reduziert und deshalb als Basisrufsteuerung bezeichnet. Die Leistungsmerkmalsteuerbausteine bilden hierbei einen Satz von Funktionen, über die auf die Rufobjekte Ruf, Teilnehmer und Verbindung zugegriffen werden kann, über die also Rufe manipuliert werden können.

Die Leistungsmerkmale selbst sind in dem Leistungsmerkmalsystem enthalten, das über ein Protokoll mit dem Basisvermittlungssystem kommuniziert.

Die Basisrufsteuerung des Basisvermittlungssystems hat die Aufgabe, den Auf- und Abbau von Rufen bzw. deren zugehörigen Verbindungen nach Teilnehmeranforderungen durchzuführen. Sie behandelt folglich im Rahmen ihres Normal ablaufes einen Zwei-Teilnehmerruf. Darüber hinaus sind Mechanismen zum Melden bestimmter Ereignisse an die Leistungsmerkmalsteuerung vorgesehen. Das Basisvermittlungssystem kann ohne Einflußnahme des Leistungsmerkmalsystemes einen Ruf zwischen zwei Teilnehmern steuern, d.h., es ist bezüglich des Auf- und Abbaus von Zwei-Teilnehmerrufen autark. Ein Zwei-Teilnehmerruf besteht zwischen zwei jeweils Teilnehmeranschlußeinheiten zugeordneten Kommunikationsendgeräten mit jeweils einer Verbindung, die den Bezug zwischen einem Kommunikationsendgerät und dem Ruf herstellt. Jeder Verbindung ist jeweils ein Zustandsautomat als Zustandsautomat der Verbindung zugeordnet. Die Verbindungen sind über den Ruf miteinander verknüpft.

Zwischen den Zuständen der Zustandsautomaten finden bestimmte Übergänge statt, die aufgrund von äußeren Anreizen ausgelöst werden. Solche Anreize sind Teilnehmer/Netz-Meldungen oder Internmeldungen, nämlich Meldungen zwischen den beiden Verbindungen eines Rufes.

Der vorliegenden Erfindung liegt die Aufgabe zugrunde, ein Kommunikationsvermittlungssystem aus einem Leistungsmerkmalsystem und einem Basisvermittlungssystem der oben angegebenen Art zu nennen, das eine einfache und eindeutige Einflußnahme des Leistungsmerkmalsystemes auf das Basisvermittlungssystem ermöglicht.

Diese Aufgabe wird gelöst durch ein Kommunikationsvermittlungssystem mit den Merkmalen des Patentanspruches 1. Günstige Ausgestaltungen sind Gegenstand von Unteransprüchen.

Erfindungsgemäß können innerhalb des Basisvermittlungssystems sowohl die Basisrufsteuerung als auch die Leistungsmerkmal-steuerbausteine auf dieselbe Datenbasis zugreifen. Dadurch wird u.a. ermöglicht, daß Informationselemente der Rufobjekte, die von der Basisrufsteuerung zur Behandlung eines Rufes verwendet werden und hierzu aus der Datenbasis gelesen werden, von dem Leistungsmerkmalsystem mit Hilfe speziell zugeordneter Leistungsmerkmalsteuerbausteine vor der Behandlung durch die Basisrufsteuerung manipulierbar sind.

Der Steuerablauf der Basisrufsteuerung ist in Bearbeitungsmodule aufgeteilt, die einzelnen Meldungen eindeutig zugeordnet sind. Meldungen sind hierbei sowohl Internmeldungen zwischen den Verbindungen als auch Teilnehmer-/Netzmeldungen zwischen den Teilnehmeranschlußeinheiten und der Basisrufsteuerung.

Dadurch wird die Behandlung von in der Datenbasis beeinflußten Rufobjekten unter Verwendung der Bearbeitungsblöcke des Steuerablaufs der Basisrufsteuerung durch das Veranlassen der Abgabe einer jeweils erforderlichen Meldung initiierbar. D.h., daß das Leistungsmerkmalsystem im Bedarfsfall mit Hilfe einer jeweils zugeordneten Funktion, nämlich dem entsprechenden Leistungsmerkmalsteuerbaustein des Basisvermittlungssystems, nach den Erfordernissen des entsprechenden Leistungsmerkmals bestimmte Informationselemente bestimmter Rufobjekte eines Rufes in der Datenbasis manipulieren kann und daraufhin, ggf. auch mit Hilfe eines für den entsprechenden Zweck festgelegten Leistungsmerkmalsteuerbausteins das Absetzen einer Meldung an den Zustandsautomaten der betroffenen Verbindung in der Basisrufsteuerung veranlaßt. Diese Meldung führt dann zu einer Behandlung der beeinflußten Rufobjekte durch die Basisrufsteuerung des Basisvermittlungssystems. Die Basisrufsteuerung kann in diesem Falle eine solche Meldung als übliche interne Meldung bewerten und braucht nicht zu unterscheiden, ob diese interne Meldung durch den eine solche Meldung üblicherweise abgebenden Zustandsautomaten einer Verbindung oder durch das Leistungsmerkmalsystem veranlaßt worden ist. Leistungsmerkmalsteuerbausteine sind also beispielsweise Zugriffsmechanismen auf Rufobjekte. Diese Zugriffsmechanismen können auch ein vom Leistungsmerkmalsystem initiiertes Wiederaufsetzen des Steuerablaufs der Basisrufsteuerung ermöglichen.

In einer günstigen Ausgestaltungsform der Erfindung sind einzelne Bearbeitungsmodule des Steuerablaufs der Basisrufsteuerung derart strukturiert, daß nach Unterbrechung des Bearbeitungsmodulablaufes an einem Ereignisgenerierungspunkt das Leistungsmerkmalsystem ein Fortsetzen des Ablaufs an der Stelle des entsprechenden Ereignisgenerierungspunktes veranlassen kann. Solche Bearbeitungsmodule sind in diesem Fall wieder in entsprechende Submodule aufgeteilt, die im Bereich der genannten Ereignisgenerierungspunkte, nämlich im Bereich von Zustandsübergängen, entsprechende Zustandseinstiegspunkte vorsehen. Die Ereignisgenerierungspunkte sind hierbei in den Bearbeitungsmodulen der Basisrufsteuerung vorgesehen und können - üblicherweise durch entsprechende Leistungsmerkmale oder das Leistungsmerkmalsteuersystem - bedarfsweise aktiviert werden. Ist ein Ereignisgenerierungspunkt aktiviert, so wird, wenn der Steuerablauf diesen Ereignisgenerierungspunktes erreicht, eine Mitteilung über den erreichten Zustand bzw. das Erfordernis einer Antwort als erwartetes Ereignis zum Leistungsmerkmalsystem übertragen. Erst nach Erhalt der erforderlichen Antwort kann der Steuerablauf fortgesetzt werden

Nachstehend wird die Erfindung anhand von Beispielen unter Bezugnahme auf die Figuren näher erläutert.

Es zeigt:
- Figur 1 in Blockdarstellung die Struktur eines Kommunikationssystemes mit erfindungsgemäßer Ausgestaltung des Vermittlungssystemes,
- Figur 2 in einer detaillierteren Blockdarstellung die Struktur eines Basisvermittlungssystemes, wie es in Figur 1 verwendet ist,
- Figur 3 in Blockdarstellung eine Basisrufsteuerung, wie sie in einem Basisvermittlungssystem nach Figur 2 verwendet ist,
- Figur 4 anhand einer Blockdarstellung einen mit Hilfe von Leistungsmerkmalsteuerbausteinen gemäß einer der Figuren 1 bis 3 durchgeführten Ablaufes,
- Figur 5 ein spezielles Ausführungsbeispiel eines Ablaufes nach Figur 4,
- Figur 6 Zustände, die ein Zustandautomat einer Verbindung, wie er in einer Basisrufsteuerung nach einer der Figuren 1 bis 5 verwendbar ist sowie die Zustandsübergänge und die Anordnung von Ereignisgenerierungspunkten,
- Figur 7 das Rufmodell eines Zwei-Teilnehmerrufes, bestehend aus zwei Halbrufen, jeweils mit einem jedem Halbruf zugeordneten Zustandsautomaten sowie den Ablauf des Geradeaus-Falles eines Zwei-Teilnehmerrufes,
- Figuren 8 und 9 die Bearbeitungsmodule bestimmter Zustandsänderungen des Ablaufes nach Figur 7.

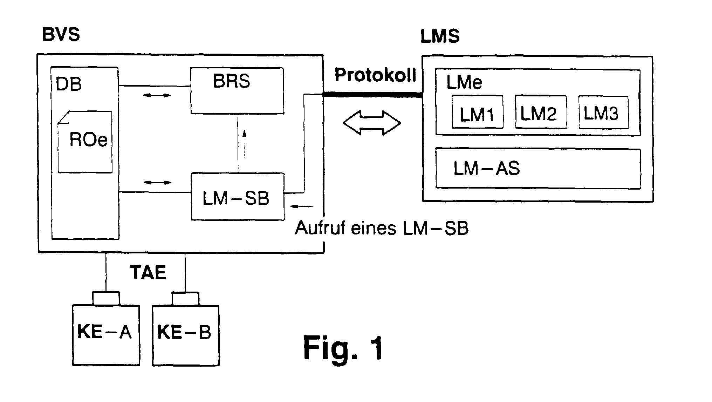

Figur 1 zeigt die Struktur eines Kommunikationssystems, bestehend aus einem Basisvermittlungssystem BVS, das über ein Protokoll mit einem Leistungsmerkmalsystem LMS kommuniziert und das über eine nicht dargestellte Teilnehmer-/Netz schnittstelle und jeweils über Teilnehmeranschlußeinheiten TAE mit Kommunikationsendgeräten KE-A und KE-B verbunden ist. Das Basisvermittlungssystem BVS enthält eine Basisrufsteuerung BRS und eine Vielzahl von Leistungsmerkmalsteuerbausteinen LM-SB. Außerdem enthält das Basisvermittlungssystem BVS eine Datenbasis DB, in der Rufobjekte ROe enthalten sind. Ein Rufobjekt RO kann hierbei aufgrund einer durch ein Kommunikationsendgerät KE-A, KE-B veranlaßte Teilnehmer-/Netzanforderung angelegt und manipuliert werden sowie mit Hilfe von Leistungsmerkmalsteuerbausteinen LM-SB. Erfindungsgemäß greifen die Leistungsmerkmalsteuerbausteine LM-SB und die Basisrufsteuerung BRS auf dieselbe Datenbasis DB zu. Demnach können Leistungsmerkmalsteuerbausteine LM-SB Rufobjekte ROe in der Datenbasis DB manipulieren, so daß die Basisrufsteuerung BRS auf der Grundlage dieser manipulierten Rufobjekte ROe mit Hilfe ihres üblichen Steuerablaufes eine von dem Leistungsmerkmalsystem LMS über die Leistungsmerkmalsteuerbausteine LM-SB veranlaßte Behandlung der Rufobjekte vornimmt.

Figur 1 zeigt als Ausführungsbeispiel eine mögliche Strukturierung eines Leistungsmerkmalsystems LMS. Hiernach besteht ein Leistungsmerkmalsystem LMS aus einer Leistungsmerkmalablaufsteuerung LM-AS und aus einer Vielzahl von Leistungsmerkmalen LME, beispielsweise einem ersten bis dritten Leistungsmerkmal LM1, LM2 und LM3.

Das Basisvermittlungssystem BVS ist von dem Leistungsmerkmalsystem LMS losgelöst, von diesem jedoch definiert beeinflußbar. Hierbei bilden die Leistungsmerkmalsteuerbausteine LM-SB die Schnittstelle zwischen dem Basisvermittlungssystem BVS und dem Leistungsmerkmalsystem LMS, über die das Leistungsmerkmalsystem LMS auf die Rufobjekte ROe der Datenbasis DB sowohl lesend als auch schreibend zugreifen kann. Schreibend heißt in diesem Falle das Eintragen von Rufobjekten zur Erstellung eines Rufes bzw. Halbrufes oder das Verändern von Informationselementen der Rufobjekte ROe. Jeder Leistungsmerkmalsteuerbaustein LM-SB bildet dabei eine vollständige Funktion für eine bestimmte Zugriffsart. Die Leistungsmerkmalsteuerbausteine bedienen sich zum Aufbau und Abbau von Verbindungen des üblichen Steuerablaufes der Basisrufsteuerung BRS, führen also den Aufbau und Abbau von Verbindungen nicht selbst durch. Die Abarbeitung der Leistungsmerkmalsteuerbausteine LM-SB kann folglich auf eine reine Manipulation der Rufobjekte in der Datenbasis abgebildet werden. Die Behandlung der manipulierten bzw. neu angelegten Rufobjekte ROe geht dann an die Basisrufsteuerung BRS über. Diese wird dann jeweils nur mit der Kennung des Rufobjektes RO versorgt und behandelt dieses durch einen normalen Steuerablauf des Zwei-Teilnehmerrufes.

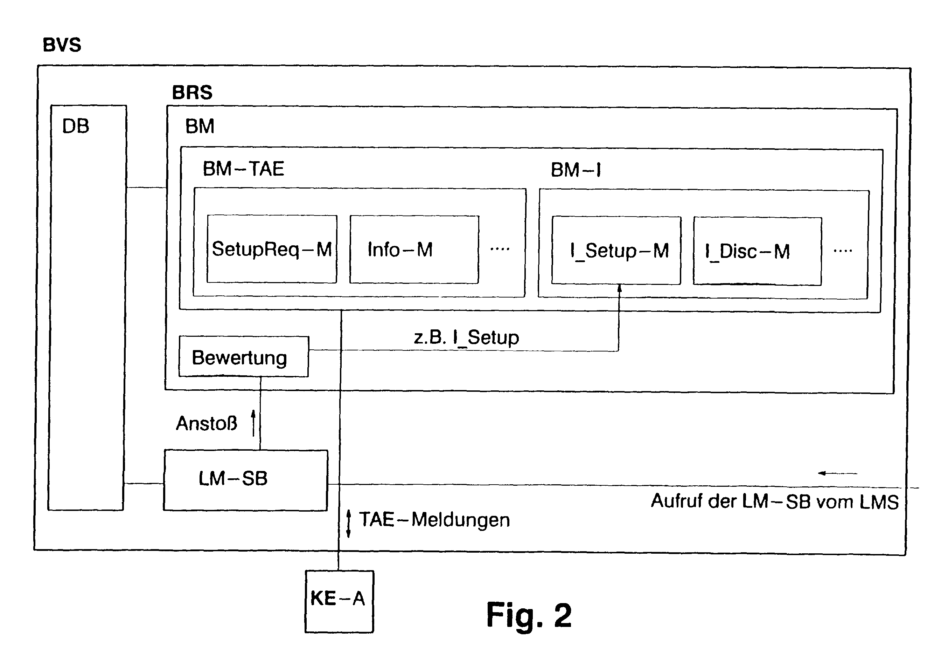

Hierzu ist es erforderlich, die Basisrufsteuerung BRS geeignet zu strukturieren, um die notwendigen Einstiegspunkte zur Bearbeitung der durch die Leistungsmerkmalsteuerbausteine LM-SB veränderten Rufobjekte ROe zu gewinnen. Die Basisrufsteuerung BRS wird hierfür in Bearbeitungsmodule untergliedert, die jeweils nur eine einzige Meldung bearbeiten. Meldungen in diesem Sinne sind sowohl die einzelnen Teilnehmer/Netz-Meldungen als auch die einzelnen Internmeldungen. Der Vorteil einer solchen Basisrufsteuerungsstruktur liegt darin, daß das Anlegen einer neuen Verbindung durch das Erzeugen der entsprechenden Internmeldung durchgeführt werden kann, die dann gemäß dem Zwei-Teilnehmerruf von der Basisrufsteuerung BRS behandelt wird. Beim Anlegen einer neuen Verbindung wäre beispielsweise die Internmeldung I-Setup mit den erforderlichen Parametern zu veranlassen (siehe Figur 2).

Wie vorstehend erläutert, wird eine in Figur 2 gezeigte, sehr modular strukturierte Basisvermittlung mit folgenden Merkmalen erhalten:
- Trennung der Basisrufsteuerung BRS, der Leistungsmerkmal-steuerbausteine LM-SB und der Datenbasis DB sowie
- eine meldungsorientierte Untergliederung der Basisrufsteuerung BRS.

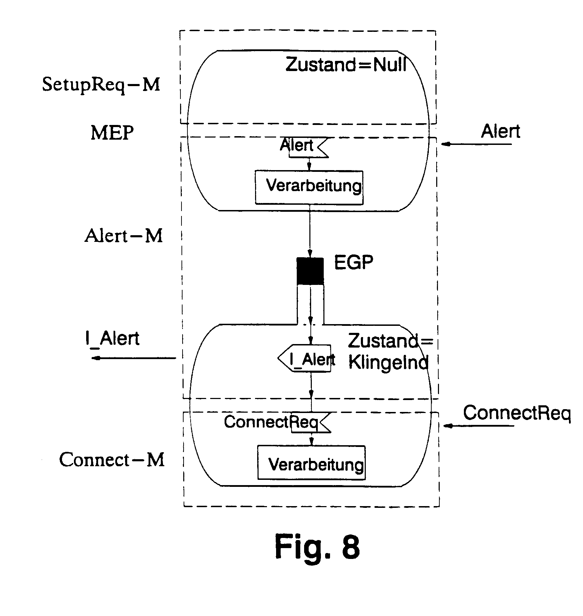

Die später näher erläuterte Figur 8 zeigt die Abbildung der Zustandsübergänge der Verbindung auf die meldungsorientierte Strukturierung der Basisrufsteuerung am Beispiel des Zustandsüberganges von Null nach Klingelnd (Endgerät klingelt).

Figur 2 zeigt detaillierter die Struktur eines Basisvermittlungssystems BVS nach Figur 1. Die Basisrufsteuerung BRS ist hierbei aufgeteilt in Bearbeitungsmodule BM, wobei unterschieden wird zwischen Bearbeitungsmodulen BM-TAE, die durch Teilnehmer-/Netz-Meldungen, hier TAE-Meldungen genannt, angereizt werden und Bearbeitungsmodulen BM-I, die durch Internmeldungen angereizt werden. Beispiele für TAE-Meldungen und die entsprechend zugeordneten Bearbeitungsmodule BM der Basisrufsteuerung BRS sind aufgeteilt in Signale, die von Kommunikationsendgeräten KE-A zur Rufsteuerung BRS übermittelt werden, wie z.B. Verbindungswunsch = Setup, Wahlziffern = Info, Auflegen des Hörers = Disc, Endgerät klingelt = Alert, Abheben des Hörers = ConnectReq und Anrufversuch mißlungen = SetupRej. In der entgegengesetzten Richtung versorgt die Teilnehmer-/Netz-Signalisierung über die nicht dargestellte Teilnehmernetzschnittstelle den Teilnehmer bzw. das Kommunikationsendgeräte KE-A mit Informationen über den Zustand des Rufs und über den Partner im Ruf. Im einzelnen kann der Teilnehmer beispielsweise folgende Informationen erhalten:
"Wählton" = SetupAck, "Eingegebene Wahlinformation gültig" = InfoComplete, "...ungültig" = InfoInvalid, Ankommender Ruf = SetupReq, "Freiton, Partner klingelt" = Alert, "Ruf durchgeschaltet" = ConnectReq, "Belegtton, Partner besetzt" = Busy, "Partner hat aufgelegt" = PartnerDisc und "Verbindungswunsch zur Zeit nicht möglich" = SetupRej. Als Bearbeitungsmodule, die jeweils durch eine gleichnamige TAE-Meldung angereizt werden, sind in Figur 2 die Bearbeitungsmodule SetupReq-M und Info-M dargestellt.

Die Zustandsautomaten der Verbindunge, die an einem Zwei-Teilnehmerruf beteiligt sind, kommunizieren über Meldungen, die sogenannten Internsignale oder Internmeldungen. Diese dienen dem Transport von Informationen zur Partnerseite, also von der A-Teilnehmerseite zur B-Teilnehmerseite oder umgekehrt, d.h. zwischen den beiden Verbindungen. Sie können aber auch Zustandsübergänge auslösen. Zur Partnerseite zu übertragende Informationen sind beispielsweise:
"Gerufene Seite ist belegt" = I-Busy, "Partner frei und klingelt" = I-Alert, "Anrufer" = I-Setup, "Partner hat abgehoben" = I-Connect und "Partner hat aufgelegt" = I-Disc. Von diesen Meldungen können I-Setup, I-Disc und I-Busy Zustandsübergänge in den Zustandsautomaten bewirken.

In Figur 2 sind als Beispiele für durch gleichnamige Internmeldungen angereizte Bearbeitungsmodule BM-I angegeben: I-Setup-M und I-Disc-M.

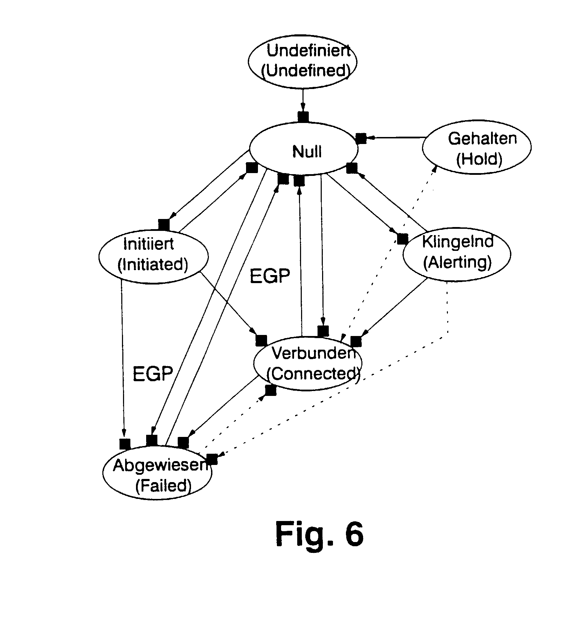

Figur 6 zeigt die Zustände, die ein Zustandsautomat einer Verbindung einnehmen kann sowie die Zustandsübergänge und die Stellen, an denen Ereignisgenerierungspunkte angeordnet sind oder sein können. Der in Figur 6 dargestellte Zustandsautomat verfügt über folgende Zustände:
"Undefiniert" (Undefined): Initialisierung, Zustandsautomat existiert nicht.
"Null": Zustandsautomat angelegt;
"Initiiert" (Initiated): Einsammeln der Wahlinformation, nachdem der Verbindungswunsch angezeigt wurde;
"Klingelnd" (Alerting): Teilnehmer klingelt;
"Verbunden" (Connected): Anrufer hat gültige Wahlinformation übergeben, der B-seitige Verbindungsaufbau beginnt bzw. der Angerufene hat den Hörer abgenommen;
"Gehalten" (Hold): Verbindung wird gehalten, kann also wieder aufgenommen werden, d.h. in den Zustand Verbunden versetzt werden;
"Abgewiesen" (Failed): Anrufer übergibt ungültige Wahlinformation, Angerufener ist besetzt.

Zwischen diesen Zuständen finden bestimmte Übergänge statt, wobei einige im Normalablauf der Rufsteuerung, d.h. im Ablauf eines Zwei-Teilnehmerrufs durchlaufen werden, andere jedoch nur durch den Eingriff eines Leistungsmerkmals ausgelöst werden können. In Figur 6 sind beide Arten von Übergängen eingezeichnet, wobei die durch ein Leistungsmerkmal erzwungenen Übergänge gestrichelt dargestellt sind. Im gezeigten Verbindungszustandsmodell (Zustandsautomat) befinden sich definierte Punkte, sogenannte Ereignisgenerierungspunkte, die das Generieren von Ereignissen im Verlauf der Verbindungsverarbeitung ermöglichen. Diese Ereignisse werden an die Leistungsmerkmalsteuerung LMS gesendet und zeigen dort einen erfolgten Zustandsübergang in der Verbindungsverarbeitung an. Die Ereignisgenerierungspunkte EGP können von dem Leistungsmerkmalsystem LMS explizit gesetzt werden.

Ist ein Ereignisgenerierungspunkt gesetzt, genügt in bestimmten Fällen eine Information über das Auftreten des Ereignisses. Manchmal ist jedoch ein Eingreifen des Leistungsmerkmals LM in den Ablauf der Rufverarbeitung BRS erforderlich. In diesem Fall muß der Ablauf der Basisrufsteuerung BRS am Triggerpunkt (Ereignisgenerierungspunkt) EGP angehalten werden können. Einem Ereignisgenerierungspunkt EGP kann deshalb bei seiner Aktivierung ein bestimmtes Attribut zugewiesen werden. Ein solches Attribut kann entweder "Benachrichtigung" oder "Warten auf Antwort" sein. In beiden Fällen wird das Ereignis generiert. Beim Attribut "Warten auf Antwort" wird jedoch die Rufsteuerung bis auf weiteres angehalten.

Da ein Ereignisgenerierungspunkt EGP von unterschiedlichen Leistungsmerkmalen LM1, LM2, LM3 mit unterschiedlichen Attributen belegt werden kann, hat vorzugsweise das stärkere Attribut Vorrang, d.h., solange mindestens eine Aktivierung mit Warten auf Antwort vorliegt, gilt dieses Attribut für den Ereignisgenerierungspunkt EGP.

Vorzugsweise wird an Stellen, die durch Aktion eines Teilnehmers einen Zustandsübergang erfordern, kein Ereignisgenerierungspunkt definiert, der eine Unterbrechung des Verbindungsverarbeitungsablaufs der Basisrufsteuerung BRS veranlaßt. Dies verhindert Inkonsistenzen zwischen dem Status des Kommunikationsendgerätes und den Zustandsautomaten der zugehörigen Verbindung.

Da die Ereignisgenerierung an den Zustandsübergang gebunden ist, kann diese Information, falls der Zustandsübergang aufgrund eines Ereignisgenerierungspunktes mit dem Attribut "Warten auf Antwort" nicht durchgeführt wird, nachträglich nicht mehr zur Leistungsmerkmalsteuerung LMS gelangen. Außerdem gibt es keine Möglichkeit, diesen Zustandsübergang nachzuholen. Das heißt beispielweise für den Fall, daß die Aktion des Teilnehmers das Abheben ist, daß die Information über das Abheben für die Basisrufsteuerung BRS verlorengeht.

Folgende drei Fälle einer unterbrochenen Verbindungsverarbeitung der Basisrufsteuerung können auftreten:
- bei einer unterbrochenen Verbindungsverarbeitung auf der A-Seite (anruferseitig) führt eine Teilnehmeraktion auf der A-Seite zu einem Zustandsübergang, jedoch nicht zu einer Signalisierungsgenerierung. Demzufolge treten keine Aktionen im Zielzustand auf;
- bei einer unterbrochenen Verbindungsverarbeitung auf der B-Seite (Seite des gerufenen Teilnehmers) kommt eine Internmeldung von der A-Seite. In diesem Fall wird die Internmeldung auf der B-Seite verworfen, auch wenn sie im B-seitigen Zustandsautomaten ZA-B einen Zustandsübergang bewirken würde;
- eine Wahlinformationsmeldung (INFO) auf der A-Seite wird nur im Zustand Initiiert verarbeitet, sonst verworfen.

Beispielsweise sollte bei einem Übergang von Null nach Klingelnd bei Abheben des gerufenen Teilnehmers der Zustandsübergang nach Verbunden durchgeführt werden. Auch bei einem Zustandsübergang von Initiiert nach Null oder von Verbunden nach Null sollte keine Unterbrechung der Verbindungsverarbeitung durchgeführt werden, da der Zustand Null durch Beeinflussung des Zustandsautomaten nicht mehr verlassen werden kann, d.h. der bereits eingeleitete Abbau einer Verbindung nicht mehr verhindert werden kann.

Für diese Zustandsübergänge ist es folglich nicht sinnvoll, die Verbindungsverarbeitung zu unterbrechen. Deshalb wird von der Verbindungsverarbeitung der Basisrufsteuerung BRS bei durch Teilnehmer bzw. seitens der Kommunikationsendgeräte KE-A, KE-B veranlaßten Aktionen auch bei unterbrochener Verbindungssteuerung der betreffende Zustandsübergang durchgeführt. Das Setzen dieser Ereignisgenerierungspunkte kann jedoch ggf. vorteilhaft sein, um die korrespondierenden Zustandsautomaten zu entkoppeln, da bei unterbrochener Basisrufsteuerung keine Internmeldungen generiert oder verarbeitet werden können.

Die von dem Basisvermittlungssystem zum Leistungsmerkmalsystem gemeldeten Ereignisse sind einerseits Triggerereignisse, also Ereignismeldungen, die bei Erreichen eines gesetzten Ereignisgenerierungspunktes an das Leistungsmerkmalsystem gesendet werden, sowie Statusereignisse, die den Wechsel des Zustandes einer Anschlußeinheit anzeigen. Mögliche Zustände sich hierbei beispielsweise frei, belegt, nicht angeschlossen oder defekt.

Vorzugsweise wird für jeden Ereignisgenerierungspunkt EGP seitens des Basisvermittlungssystemes ein spezifisches Ereignis generiert. Um den Ereignisgenerierungspunkt EGP eindeutig beschreiben zu können, muß zur Art des Ereignisses zusätzlich die Verbindung, in der der Zustandsübergang aufgetreten ist und deren Richtung bekannt sein. Eine weitere wichtige Information für das Leistungsmerkmalsystem ist, ob das Attribut des Ereignisgenerierungspunktes "Benachrichtigung" oder "Warten auf Antwort" war. Diese Daten und evtl. einige weitere Informationen werden als Parameter in einer Ereignismeldung mitgeführt und im Rahmen eines Protokolls von dem Basisvermittlungssystem BVS zum Leistungsmerkmalsystem LMS übertragen.

Ein Statusereignis wird generiert, wenn die entsprechende Zustandsänderung erfolgt und ein Monitor für diese Zustandsänderung gesetzt wurde. Gemäß den möglichen Zuständen kann ein Monitor beispielsweise für "Frei nach belegt", "belegt nach frei" oder auch als kontinuierlicher Monitor, der alle Statusänderungen überwacht, gesetzt werden.

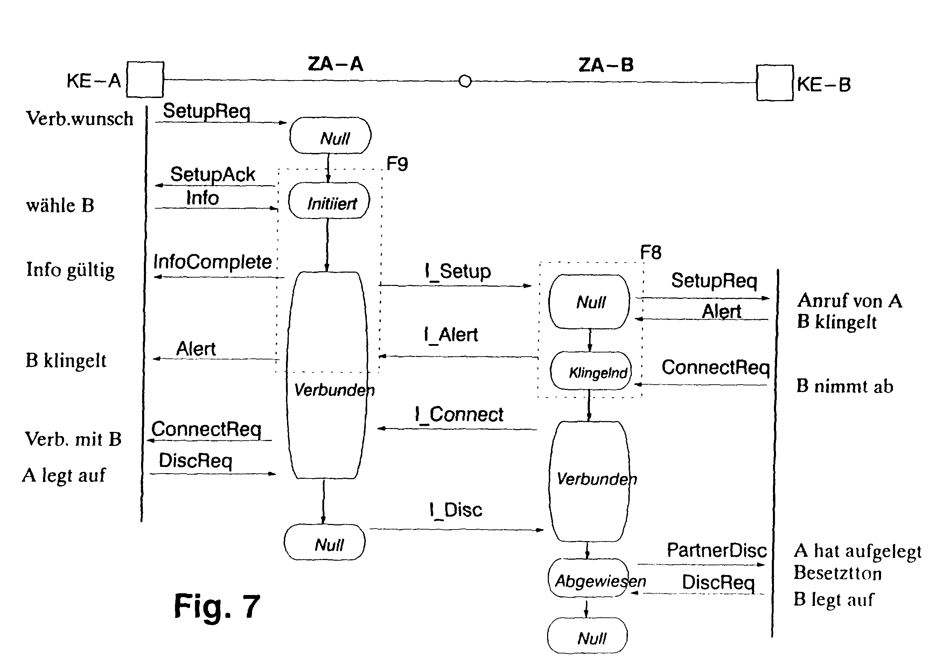

Nachstehend wird unter Bezugnahme auf Figur 7 anhand eines Zwei-Teilnehmerrufs die Arbeitsweise von Zustandsautomaten der Verbindung für den Normalablauf der Basisrufsteuerung gezeigt. In Figur 7 ist der Geradeausfall dargestell, d.h., der A-Teilnehmer ruft von dem Kommunikationsendgerät KE-A den B-Teilnehmer mit dem Kommunikationsendgerät KE-B, das Kommunikationsendgerät KE-B ist frei, nach erfolgtem Verbindungsaufbau löst der Teilnehmer A einen Verbindungsabbau aus.

In Figur 7 oben ist das Modell des Zwei-Teilnehmerrufes in Form von einem Halbruf und eine Verbindung mit Teilnehmer dargestellt. Der Ruf zwischen dem Kommunikationsendgerät KE-A und dem Kommunikationsendgerät KE-B besteht aus jeweils einer Verbindung mit zugehörigem Zustandsautomaten ZA-A und ZA-B, die über den Ruf zu einem Zwei-Teilnehmerruf verbunden sind. Die Kommunikationsendgeräte kommunizieren mit dem im Modell nicht dargestellten Basisvermittlungssystem über die ebenfalls im Modell nicht dargestellte Teilnehmer-/Netzschnittstelle. Die Zustandsautomaten ZA-A und ZA-B der A-seitigen und B-seitigen Verbindung kommunizieren hierbei über Internmeldungen. Die Rufobjekte RO, aus denen sich ein Zwei-Teilnehmerruf zusammensetzt, werden durch Daten repräsentiert, die in der im Modell auch nicht dargestellten Datenbasis DB abgelegt sind. Nachstehend wird der in Figur 7 dargestellte Ablauf des Verbindungsauf- und Verbindungsabbaus dargestellt: Der A-Teilnehmer zeigt durch Abheben des Hörers der Basisrufsteuerung einen Verbindungswunsch an. Hierzu wird vom Kommunikationsendgerät KE-A die Meldung SetupReq zum Basisvermittlungssystem BVS übertragen. Die Verbindung auf Seiten des Zustandsautomaten ZA-A wird angelegt. Der Zustandsautomat ZA-A der Verbindung ist im Zustand Null und geht über in den Zustand Initiiert. Die Basisrufsteuerung BRS quittiert dies dadurch, daß der Teilnehmer durch die Meldung SetupAck zur Eingabe der Wahlinformation aufgefordert wird.

Der Teilnehmer A übergibt die Wahl information Info an die Basisrufsteuerung. Die Basisrufsteuerung prüft die Gültigkeit der Wahl information und quittiert die positive Überprüfung durch die Meldung InfoComplete an den A-Teilnehmer nach Übergang des Zustandsautomaten der Verbindung in den Zustand Verbunden. Außerdem wird die Internmeldung I-Setup zum Anlegen der B-seitigen Verbindung erzeugt.

Die B-seitige Verbindung wird angelegt, d.h., der Zustandsautomat ZA-B geht in den Zustand Null und dem B-Teilnehmer wird durch die Meldung SetupReq der von A kommende Ruf signalisiert. Das Kommunikationsendgerät KE-B bestätigt die Signalisierung mit der Meldung Klingelnd (Alert). Daraufhin geht der Zustandsautomat ZA-B vom Zustand Null in den Zustand Klingelnd. Außerdem wird die Internmeldung I-Alert an den Zustandsautomaten ZA-A der A-Verbindung übertragen. Die Basisrufsteuerung BRS signalisiert mit der Meldung Alert dem A-Teilnehmer, daß das Kommunikationsendgerät KE-B klingelt. Wenn der B-Teilnehmer abnimmt, wird vom Kommunikationsendgerät KE-B die Meldung ConnectReq zur Basisrufsteuerung übertragen. Der Zustandsautomat der Verbindung ZA-B geht aus dem Zustand Klingelnd in den Zustand Verbunden über und gibt die Internmeldung I-Connect ab. Die Basisrufsteuerung quittiert dem A-Teilnehmer den Verbindungsaufbau mit der Meldung ConnectReq. Wenn der A-Teilnehmer durch Auflegen des Hörers des Kommunikationsendgerät KE-A die Verbindung beenden möchte, wird vom Kommunikationsendgerät KE-A die Meldung DiscReq zur Basisrufsteuerung übertragen. Der Zustandsautomat ZA-A der Verbindung geht vom Zustand Verbunden in den Zustand Null über und gibt die Internmeldung I-Disc ab. Der Zustandsautomat ZA-B der Verbindung geht vom Zustand Verbunden in den Zustand Abgewiesen und signalisiert über die Meldung PartnerDisc dem B-Teilnehmer, daß der A-Teilnehmer aufgelegt hat. Nach Auflegen des Hörers am Kommunikationsendgerät KE-B sendet dieses die Meldung DiscReq zur Basisrufsteuerung. Daraufhin geht der Zustandsautomat ZA-B der Verbindung vom Zustand Abgewiesen in den Zustand Null über.

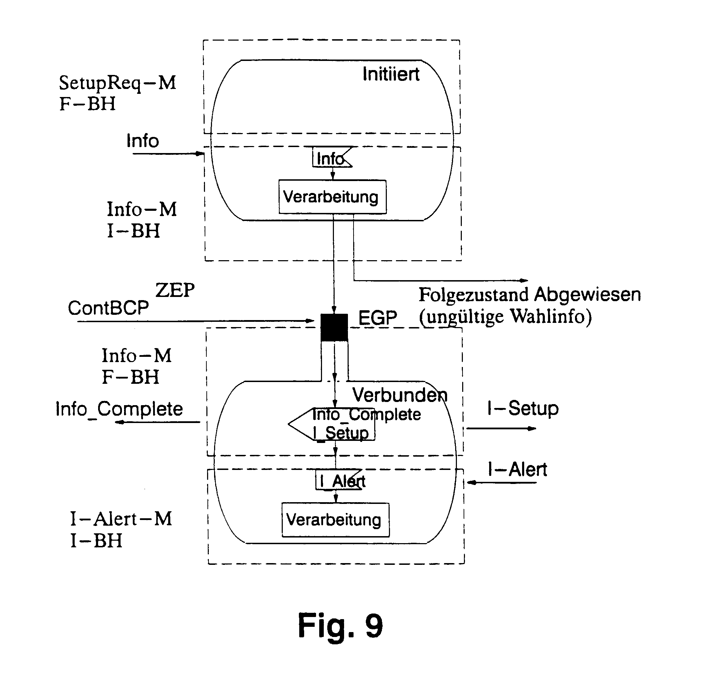

Der Verfahrensablauf des Zustandsüberganges des Zustandsautomaten ZA-A der Verbindung von Initiiert nach Verbunden ist in Figur 7 mit einer unterbrochenen Linie eingerahmt und mit dem Bezugszeichen F9 bezeichnet. Dieses Modul bzw. diese Module der Basisrufsteuerung BRS werden in Figur 9 detaillierter gezeigt.

Figur 8 zeigt den in Figur 7 ebenfalls mit einer unterbrochenen Linie eingerahmten und mit dem Bezugszeichen F8 gekennzeichneten Verfahrensschritt vom Zustand Null zum Zustand Klingelnd des Zustandsautomaten ZA-B der Verbindung im Detail. An diesem Beispiel ist die Abbildung der Zustandsübergänge der Verbindung auf die meldungsorientierte Strukturierung der Basisrufsteuerung BRS zu erkennen. Ein Basisrufsteuerungsmodul BM leistet sowohl für einen Ausgangszustand Zᵢ der Verbindung als auch für den Folgezustand Zᵢ₊₁ Verarbeitungsoperationen. Für den Zustand Zᵢ sind diese Operationen:
- Empfangen der den Übergang auslösenden Meldung;
- Prüfen von Bedingungen zur Bestimmung des Folge zustandes und
- Einnehmen des Folgezustandes.
Für den Folgezustand Zᵢ₊₁ sind die Verarbeitungsoperationen:
- Ereignisgenierungspunkt-Behandlung;
- Ausgabe von Quittungen, die den Zustandsübergang repräsentieren und
- Ausgabe von Intern-Signalisierung zum Partner bzw. zum Zustandsautomaten der Partner-Verbindung.

Ist der betrefffende Ereignisgenerierungspunkt EGP mit dem Attribut "Antwort erforderlich" gesetzt, so unterbleibt das Versenden von Meldungen, wie z.B. Quittungen und Internsignalisierung im Folgezustand. Die Basisrufsteuerung wird am Eingang des Folgezustandes suspendiert.

Der Zustandsübrergang nach Null beim Abbau einer Verbindung stellt bei der Aufteilung der Verarbeitungsoperationen auf Zᵢ und Zᵢ₊₁ eine Ausnahme dar, da hier im Folgezustand nicht nur Meldungen verschickt werden, sondern zusätzlich die Verbindung in der Datenbasis gelöscht wird.

Wie in Figur 8 dargestellt, befindet sich der Zustandsautomat ZA-B der B-seitigen Verbindung im Zustand Null wenn das Setup Request-Modul SetupReq-M abgearbeitet ist. Hier ist ein Meldungseinstiegspunkt MEP vorgesehen, an dem die Teilnehmer-/Netz-Meldung eingegeben werden kann. Diese Meldung Alert zum Signalisieren, daß das Kommunikationsendgerät KE-B klingelt, wird am Einstiegspunkt MEP des Alert-Modules Alert-M eingegeben. Nach Verarbeitung der Meldung Alert erreicht der Zustandsautomat ZA-B der Verbindung einen Ereignisgenerierungspunkt EGP, der durch ein Leistungsmerkmal aktiviert werden kann. Ist dieser Ereignisgenerierungspunkt aktiviert und hat das Attribut "Antwort erforderlich", so wird nur nach Empfang der Antwort für die Fortsetzung der Ablauf im Alert-Modul fortgesetzt. Die erforderliche Antwort kann beispielsweise ein von einem Leistungsmerkmalsteuerbaustein LM-SB initiierter Befehl ContBCP (Basic Call Processing Continue) mit der Bedeutung sein, den Ablauf der Basisrufsteuerung fortzusetzen.

Falls der Ereignisgenerierungspunkt nicht aktiviert ist oder falls die erforderliche Antwort erhalten worden ist, geht der Zustandsautomat ZA-B der Verbindung vom Zustand Null in den Zustand Klingelnd. Außerdem wird die Internmeldung I-Alert an die Partnerseite abgegeben. Die Basisrufsteuerung erreicht dann mit der Beendigung des Alert-Modules einen erneuten Meldungseinstiegspunkt, an dem im Beispiel der Figur 8 seitens des Kommunikationsendgerätes KE-B die Meldung Connect Request ConnectReq erwartet wird. Die Meldung Connect Request wird am Einstiegspunkt des Connect-Modules Connect-M eingegeben und innerhalb dieses Modules Connect-M verarbeitet.

Soll die Basisrufsteuerung, wie zuvor kurz angedeutet, nach Unterbrechung an einem Ereignisgenerierungspunkt fortgesetzt werden, ist es folglich zusätzlich sinnvoll, in der Strukturierung der Basisrufsteuerung Zustandseinstiegspunkte vorzusehen, an denen bei Bedarf in den Ablauf der Basisrufsteuerung eingesprungen werden kann. Dies hat eine weitere Unterteilung der Basisrufsteuerungs-Bearbeitungsmodule BM, BM-TAE, BM-I zur Folge, wie in Figur 9 am Beispiel des Zustandsüberganges von Initiiert nach Verbunden unter Berücksichtigung der Eingabe der Wahlinformation Info und der Verarbeitung der Wahl information mit dem Ergebnis der Meldungsausgabe Info-Complete und I-Setup zu sehen ist.

Hierbei werden die zuvor beschriebenen Bearbeitungsmodule BM der Basisrufsteuerung BRS folgenderweise in Untermodule aufgeteilt:
- Eingabebehandlung:
   - Bewertung des Eingabesignales (Input);
   - Entscheidung über durchzuführenden Zustandsübergang;
   - Einnehmen des Folgezustandes und
      - Meldung an betreffendes "Fortsetzungs"-Modul
- Behandlung des Ereignisgenerierungspunktes und Quittierung:
   Pro möglichen Zustandsübergang wird eine Folgebehandlungseinheit vorgesehen, die folgende Aufgaben besitzt:
   - Ereignisgenerierungspunktbehandlung mit
      - Ereignisgenerierung und
      - ggf. Suspendieren der Basisrufsteuerung BRS für diese Verbindung;
   - Generieren von Meldungen:
      - Quittungen zur Teilnehmer-/Netzseite und
      - Internmeldungen zur Partnerseite.

Das in Figur 9 gezeigte Beispiel einer solchen Ausgestaltung der Erfindung geht von dem Zustand Initiiert des Zustandsautomaten ZA-A der Verbindung im Setup Request-Modul SetupReq-M als Folgebehandlung F-BH aus. Diese führt zu einem Meldungseinstiegspunkt, an dem die Meldung Info eingegeben wird. Die Eingabe der Meldung Info wird im Info-Modul Info-M als Eingabebehandlung I-BH bearbeitet. Das Modul Info-M hat zwei mögliche Ausgabeergebnisse. Wenn die Wahlinformation Info ungültig war, folgt der nicht dargestellte Folgezustand "Abgewiesen" mit zugehörigem Ereignisgenerierungspunkt. War die Wahlinformation Info gültig, wird ein Ereignisgenerierungspunkt EGP des Folgezustandes "Verbunden" erreicht. Dieser Ereignisgenerierungspunkt EGP kann das Attribut "Antwort erforderlich" haben, d.h. an dieser Stelle ist ein Zustandseinstiegspunkt ZEP vorgesehen. Eine von einem Leistungsmerkmalsteuerbaustein LM-SB veranlaßte Meldung ContBCP zum Fortsetzen der Basisrufsteuerung wird an diesem Zustandseinstiegspunkt ZEP eingegeben, woraufhin als Folgebehandlung F-BH das erforderliche Basisrufsteuerungsuntermodul des Bearbeitungsmoduls Info-M abgearbeitet wird. Hierbei geht der Zustandsautomat ZA-B der Verbindung in den Zustand Verbunden über und die Meldungen Info-Complete und I-Setup werden abgegeben. Daraufhin wird nach Eingabe der Internmeldung I-Alert als Eingabe-Behandlung I-BH das Modul I-Alert-M abgearbeitet.

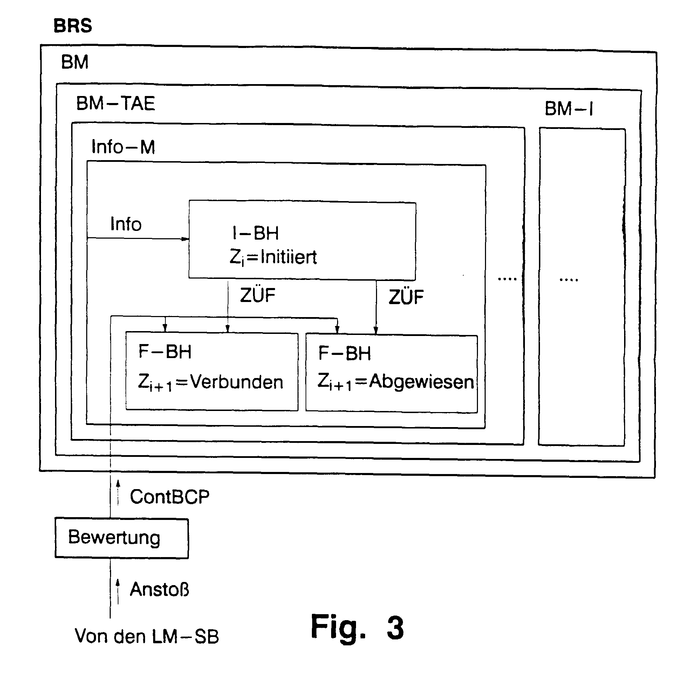

Figur 3 zeigt am Beispiel des Bearbeitungsmoduls Info-M den Aufbau der Basisrufsteuerung BRS, der sowohl Meldungseinstieg als auch Zustandseinstieg ermöglicht. Im Zustand Zᵢ = Initiiert entscheidet die Eingabebehandlung I-BH nach Prüfung der eingegebenen Wahl information Info über den einzunehmenden Folgezustand und schickt dem Folgebehandlungsmodul F-BH für den entsprechenden Zustand Zᵢ₊₁ = Verbunden oder Zᵢ₊₁ = Abgewiesen die Fortsetzungsmeldung Züf zur Fortsetzung der Behandlung des Zustandsüberganges. Am Eingang der Folgebehandlung F-BH befindet sich ein in Figur 3 nicht dargestellter Ereignisgenerierungspunkt. Ist dieser aktiviert und hat das Attribut "Antwort erforderlich", so wird die Basisrufsteuerung an dieser Stelle angehalten, die Folgebehandlung F-BH wird nicht unmittelbar ausgeführt. Wird von einem Leistungsmerkmalsteuerbaustein LM-SB ein Fortsetzungsbefehl angestoßen, so gibt eine Bewertungseinrichtung Bewertung aufgrund dieses Anstoßes eine Fortsetzungsmeldung ContBCP an das zuständige Folgebehandlungs-Submodul F-BH ab. Die Meldung ContBCP wirkt auf das Folgebehandlungsmodul F-BH des ausgewählten Zustandes Zᵢ₊₁ in gleicher Weise wie der vom Eingabe-Behandlungssubmodul abgegebene Befehl Züf, jedoch ohne daß eine Ereignisgenerierung am Ereignisgenerierungspunkt stattfindet. Der Ereignisgenerierungspunkt ist jedoch der Einstiegspunkt für die Meldung ContBCP.

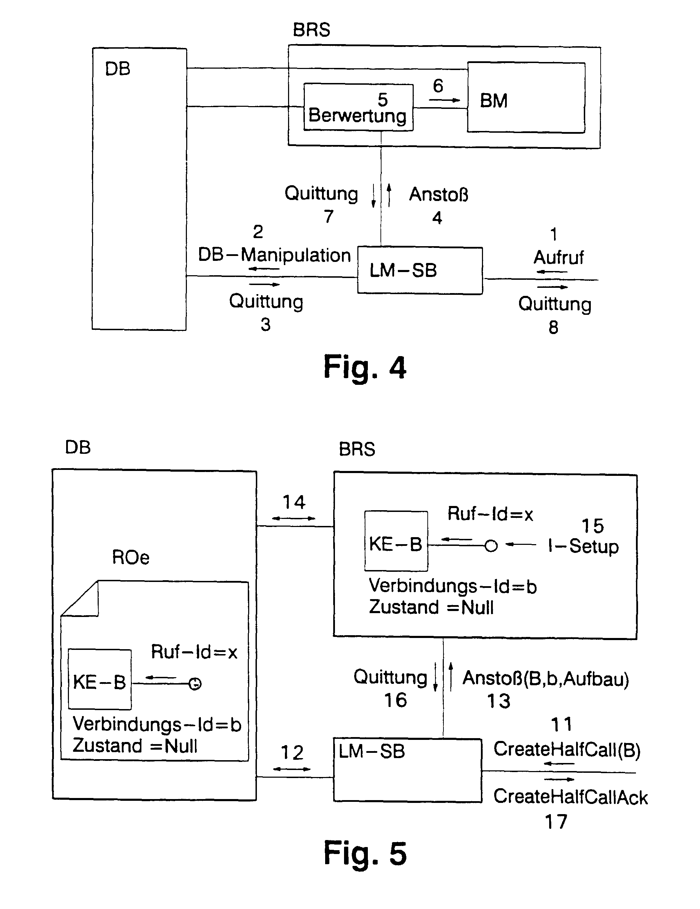

Das Leistungsmerkmalsystem LMS manipuliert mit Hilfe von Leistungsmerkmalsteuerbausteinen LM-SB den Auf- und Abbau von Verbindungen durch die Basisrufsteuerung BRS. Hierzu greifen die Leistungsmerkmalsteuerbausteine LM-SB auf die Datenbasis DB der Basisrufsteuerung BRS zu. Figur 4 zeigt den allgemeinen Ablauf der Leistungsmerkmalsteuerbausteinbearbeitung, insbesondere die Manipulation von Rufobjekten, durch das Basisvermittlungssystem BVS. Die in der Figur angegebenen Ziffern geben hierbei die zeitliche Reihenfolge der einzelnen Vorgänge an. In Figur 4 sind die Datenbasis DB, die Leistungsmerkmalsteuerbausteine LM-SB und die Basisrufsteuerung BRS mit einer Bewertungseinrichtung Bewertung und Bearbeitungsmodulen BM dargestellt sowie Informationsflußwege zwischen diesen Komponenten.

Nahfolgend wird der in Figur 4 dargestellte Ablauf unter Zuhilfenahme der in der Figur angegebenen Ziffern aufgelistet:
1 Aufruf der Leistungsmerkmalsteuerbausteine LM-SB durch das Leistungsmerkmal LM, insbesondere das Leistungsmerkmalsystem LMS;
2 Manipulation bzw. Anlegen des entsprechenden Rufobjektes in der Datenbasis DB durch die Leistungsmerkmalsteuerbausteine LM-SB;
3 Quittierung des Datenbasiszugriffs an die Leistungsmerkmalsteuerbausteine LM-SB;
4 Anstoß der Basisrufsteuerung durch die Leistungsmerkmal-steuerbausteine mit der Bedeutung "Bearbeite manipulierte Verbindung" unter Angabe der erforderlichen Informationen, wie z.B. Endgeräte-Identifikation, Verbindungsidentifikation und Steuerinformationen;
5 Bewertung des Anstoßsignals anhand der Daten des neuen bzw. manipulierten Rufobjektes durch die Bewertungseinrichtung Bewertung;
6 ggf. Ausgabe von Internmeldungen, wie z.B. I-Setup von der Bewertungseinrichtung an die Bearbeitungsmodule BM;
7 Quittierung des Anstoßes der Basisrufsteuerung von der Basisrufsteuerung zu den Leistungsmerkmalsteuerbausteinen LM-SB;
8 Quittierung von den Leistungsmerkmalsteuerbausteinen LM-SB an das Leistungsmerkmal LM, insbesondere das Leistungsmerkmalsystem LMS.

Als Parameter werden beim Anstoß der Basisrufsteuerung durch die Leistungsmerkmalsteuerbausteine LM-SB die Identifizierung der Kommunikationsendgeräte KE und der Verbindung sowie eine Steuerinformation mitgeliefert, die die Art der gewünschten Behandlung in der Basisrufsteuerung bestimmt. Die Steuerinformation kann die Werte Löschen, Aufbau, Zustandswechsel und Fortsetzen annehmen. Dieser Parameter ist nötig, da aus den gespeicherten Daten einer Verbindung nicht immer eindeutig ermittelt werden kann, welche Bearbeitung in der Basisrufsteuerung durchzuführen ist.
Beim Löschen einer Verbindung können die in Figur 4 gezeigten Schritte 2 und 3 entfallen, da das Attribut "Löschen" bereits genug Aussagekraft besitzt.

Beim Aufruf des Leistungsmerkmalsteuerbausteines LM-SB zur Fortsetzung der Basisrufsteuerung, also bei Absetzen der Meldung ContBCP entfallen ebenfalls die Schritte 2 und 3. Die Anstoßbehandlung muß lediglich den Fortsetzungspunkt (Zustandseinstiegspunkt) im Zustandsautomaten der Verbindung festlegen, um dem Basisrufsteuerungsuntermodul die entsprechende Meldung schicken zu können.

Bei Aufruf eines Leistungsmerkmalsteuerbausteines LM-SB, der eine Verbindung oder einen Halbruf, also ein Kommunikationsendgerät, eine Verbindung sowie einen Ruf ohne Partner anlegt, kann festgelegt werden, ob nach dem Anlegen in der Datenbasis die Basisrufsteuerung automatisch angestoßen werden soll oder nicht. Soll für eine soeben erzeugte Verbindung ein Ereignisgenerierungspunkt EGP gesetzt werden, so darf die Basisrufsteuerung BRS diese Verbindung erst dann aufbauen, wenn der Ereignisgenerierungspunkt bereits aktiv ist. Die Kennung der Verbindung ist jedoch erst nach der Bestätigungsmeldung des Leistungsmerkmalsteuerbausteines im Leistungsmerkmal LM bekannt. Aus diesem Grund wird die Basisrufsteuerung BRS in einem solchen Fall erst nach dem Setzen des Ereignisgenerierungspunktes durch den Aufruf des Leistungsmerkmalsteuerbausteines bzw. die Meldung BCPCont angestoßen.

In Figur 5 wird nachstehend am Beispiel des Leistungsmerkmalsteuerbausteines "Create Half Call" die Behandlung des Leistungsmerkmalsteuerbausteines im Detail erläutert.

Create Half Call erzeugt einen kommenden oder gehenden Halbruf. Sind die Voraussetzungen für ein erfolgreiches Anlegen des Halbrufes, nämlich Teilnehmer frei und Ressourcen verfügbar, erfüllt, so wird eine neue Verbindung in der Datenbasis angelegt, deren Partnereintrag "Leistungsmerkmal" ist. Zu diesem Zeitpunkt existiert kein gültiges Partner-Kommunikationsendgerät. Eine gehende Verbindung wird dabei im Zustand Verbunden angelegt, eine kommende im Zustand Null.

Soll aufgrund der im Create Half Call enthaltenen Steuerinformation die Rufsteuerung automatisch angestoßen werden, so schickt der entsprechende Leistungsmerkmalsteuerbaustein LM-SB ein Anstoßsignal CPSync, die neben den Parametern für die Kommunikationsendgeräteidentifikation und für die Verbindungsidentifikation den Parameter "Aufbau" enthält, an die Basisrufsteuerung BRS. Ist ein Anstoßen der Basisrufsteuerung BRS nicht möglich, so sendet die Bewertungseinrichtung Bewertung ein Signal CPSyncRej an den Leistungsmerkmalsteuerbaustein, der daraufhin ein Signal Create Half Call Rej aussendet. Dies ist der Fall, wenn beispielsweise durch Auslösen der Verbindung durch den Teilnehmer die Verbindungsdaten in der Datenbasis DB bereits gelöscht sind. Abschließend werden dem Leistungsmerkmal LM bzw. der Leistungsmerkmalsteuerung LMS mit der Meldung Create Half Call Ack die Kennungen des erzeugten Halbrufes und die der zugehörigen Verbindung übergeben.

Nachfolgend wird der in Figur 5 dargestellte Ablauf unter Zuhilfenahme der in der Figur angegebenen Ziffern 11 bis 17 aufgelistet:
11 Die Leistungsmerkmalsteuerung LMS ruft einen Leistungsmerkmalsteuerbaustein LM-SB auf mit einer Meldung Create Half Call mit den Parametern B für das Kommunikationsendgerät, Kommend für die Verbindung, Null für den Zustand und AutoCPSync als Steuerinformation, die besagt, daß die Rufsteuerung automatisch angestoßen werden soll.
12 Anlegen der neuen Rufobjekte ROe in der Datenbasis DB Ruf: Rufid
   Verbindung: Verbindungid, Zustand = Null, Richtung = Kommend
   Quittierung des Datenbasiszugriffs:
   Rückgabe der Verbindungsdaten und der Identifizierungskennungen;
13 Anstoß der Basisrufsteuerung durch den Leistungsmerkmalsteuerbaustein LM-SB: "Bearbeite Verbindung: KE.id, Verb.id, Aufbau";
14 Auslesen der Verbindungsdaten aus der Datenbasis DB durch die Basisrufsteuerung BRS;
15 Generieren einer Internmeldung I-Setup-M zur dynamischen Bearbeitung der Verbindung mit dem virtuellen Partner "Leistungsmerkmal". Bearbeitet wird die Teilnehmer-/Netz-Signalisierung. Die Intern-Signalisierung zum Partner wird hierbei automatisch verworfen;
16 Quittierung des Anstoßes von der Basisrufsteuerung BRS zum Leistungsmerkmalsteuerbaustein LM-SB;
17 Quittierung des Leistungsmerkmalsteuerbaustein-Aufrufes an die Leistungsmerkmalsteuerung LMS mit Rückgabe der Kennungen.

Im in Figur 5 gezeigten Beispiel wird die Basisrufsteuerung BRS automatisch angestoßen. Ist ein vorheriges Setzen von Ereignisgenerierungspunkten EGP notwendig, kann dies erst nach Anlegen des Halbrufes in der Datenbasis DB geschehen, da vorher die erforderliche Kennung der Verbindung nicht bekannt ist. Der Aufbau des Halbrufes wird dann explizit über den Leistungsmerkmalsteuerbaustein BCPCont angestoßen. Die Basisrufsteuerung ist für die neu angelegte Verbindung nicht unterbrochen. Sie existiert aber nur in der Datenbasis DB und kann, da sie nur zu einem Halbruf gehört, keine Internsignalisierung empfangen. Der erst später einzubindende Teilnehmer bzw. dessen Kommunikationsendgerät kann auch keine Signalisierung für diese Verbindung erzeugen, da der Aufbau noch nicht begonnen hat.

Leistungsmerkmalsteuerbausteine LM-SB können mit Hilfe von Anstoßsignalen die Basisrufsteuerung BRS für bestimmte Verbindungen anstoßen. Als Parameter werden in solchen Anstoßsignalen die Kennung des Kommunikationsendgerätes KE-A, die Verbindungskennung und eine Steuerinformation, wie z.B. Aufbau, Löschen, Zustandsänderung oder Fortsetzen mitgeliefert.

Durch diesen Mechanismus ist es möglich, daß die Leistungsmerkmalsteuerbausteine LM-SB mit Hilfe der Basisrufsteuerung BRS bestimmte Aktionen, wie z.B. das Auf- oder Abbauen eines Rufs und die erforderlichen Signalisierungen durchführen können. Dadurch wird die Trennung in funktionale Einheiten auch im Innern der Basisvermittlung verwirklicht.

Ein Leistungsmerkmalsteuerbaustein LM-SB gibt jeweils die Aufgaben, die normalerweise von der Basisrufsteuerung BRS bearbeitet werden an die Basisrufsteuerung BRS weiter. Dabei werden im allgemeinen von dem Leistungsmerkmalsteuerbaustein LM-SB bestimmte Daten in der Datenbasis DB abgelegt, wie z.B. das Anlegen einer neuen Verbindung, das Eintragen eines neuen Zustandes usw. Daraufhin wird die Basisrufsteuerung BRS angestoßen und führt die Bearbeitung zu Ende.

Die Anstoßbehandlung fordert erst die Verbindungsdaten von der Datenbasis DB für die in den Parametern übergebene Verbindung an. Falls die Verbindung als angehalten gekennzeichnet war, wird dieses Attribut jetzt gelöscht. Anhand der Verbindungsdaten und der Steuerinformation wird dann ermittelt, welche Aktionen durchzuführen sind.

Zum Auf- bzw. Abbau einer Verbindung werden die Signale I-Setup bzw. I-Disc generiert. Durch diese Signale wird die normale Weiterverarbeitung in der Basisrufsteuerung BRS angestoßen.

Bei Zustandsänderungen können Internmeldungen erzeugt werden, die dem Teilnehmer die Zustandswechsel signalisieren. Beispiele hierzu sind I-Busy und I-Connect.

Beim Fortsetzen des Ablaufes der Basisrufsteuerung BRS wird der Wiedereinstiegspunkt im Zustandsautomaten ZA-A der Verbindung bestimmt und dem betreffenden Untermodul des Bearbeitungsmoduls BM der Basisrufsteuerung BRS wird die Meldung zum Fortsetzen der Zustandsbearbeitung gesendet.

Die Anstoßbehandlung bestätigt dem Leistungsmerkmalsteuerbaustein LM-SB das erfolgreiche Durchführen ihrer Aktionen mit einer Meldung, die am Ende eine Kennung Ack für Acknowledge angehängt hat. Eine Meldung mit der Endung Rej für Reject zeigt an, daß die Aktion nicht erfolgreich durchgeführt werden konnte. Ein solches Reject-Signal wird beispielsweise dann erzeugt, wenn die anzustoßende Verbindung nicht mehr existiert.

## Patentansprüche

1. Kommunikationsvermittlungssystem, bestehend aus einem Leistungsmerkmalsystem (LMS) und einem Basisvermittlungssystem (BVS), wobei das Basisvermittlungssystem (BVS) eine Basisrufsteuerung (BRS) zur Steuerung eines 2-Teilnehmer-Rufs aus zwei über Meldungen kommunizierenden Verbindungen mit jeweils zugeordneten Zustandsautomaten hat, eine Rufobjekte (RO) enthaltende Datenbasis (DB) und eine Vielzahl von vermittlungsseitigen Leistungsmerkmal-Steuerbausteinen (LM-SB) in Form von aufrufbaren Funktionen zur wahlweisen Beeinflussung der Rufobjekte,
**dadurch gekennzeichnet,** daß sowohl die Basisrufsteuerung (BRS) als auch die Leistungsmerkmal-Steuerbausteine (LM-SB) auf die Datenbasis (DB) zugreifen können und daß im Steuerablauf der Basisrufsteuerung (BRS) jedem Meldungstyp ein spezielles Bearbeitungsmodul zugeordnet ist, um ein Initiieren der Behandlung der beeinflußten Rufobjekte (RO) unter Verwendung der Bearbeitungsblöcke des Steuerablaufs der Basisrufsteuerung (BRS) durch das Leistungsmerkmalsystem (LMS) zu ermöglichen.

2. Kommunikationsvermittlungssystem nach Anspruch 1,
**gekennzeichnet durch** eine derartige Struktur der Bearbeitungsmodule des Steuerablaufs der Basisrufsteuerung (BRS), daß nach Unterbrechung des Bearbeitungsmodulablaufes an einem Ereignisgenerierungspunkt ein Initiieren der Ablauffortsetzung durch das Leistungsmerkmalsystem (LMS) möglich ist.

3. Kommunikationsvermittlungssystem nach Anspruch 1 oder 2,
wobei Zustandsübergänge der einzelnen Zustandsautomaten durch teilnehmerseitige Anreize und durch Meldungen innerhalb des Basisvermittlungssystems (BVS) - beispielsweise von dem Zustandsautomaten der jeweils anderen Verbindung - auslösbar sind, **dadurch gekennzeichnet,** daß das Leistungsmerkmalsystem durch Veranlassen einer internen Meldung an einen der Zustandsautomaten die Behandlung der beeinflußten Rufobjekte (RO) initiiert.

4. Kommunikationsvermittlungssystem nach Anspruch 1, 2 oder 3, **dadurch gekennzeichnet,** daß das Leistungsmerkmalsystem mit Hilfe von Leistungsmerkmal-Steuerbausteinen (LM-SB) auf die Datenbasis (DB) zugreifen kann sowie die Behandlung der beeinflußten Rufobjekte (RO) initiieren kann.

## Claims

1. Communication switching system consisting of a facility system (LMS) and a basic switching system (BVS), the basic switching system (BVS) having a basic call controller (BRS) for controlling a two-party call from two connections communicating via messages, having in each case associated state machines, a database (DB) containing call objects (RO) and a multiplicity of facility control modules (LM-SB) at the switch in the form of callable functions for optionally influencing the call objects,
characterized in that both the basic call controller (BRS) and the facility control modules (LM-SB) can access the database (DB) and in that in the control sequence of the basic call controller (BRS), a special processing module is allocated to each message type in order to be able to initiate the treatment of the call objects (RO) which have been influenced, using the processing blocks of the control sequence of the basic call controller (BRS) by means of the facility system (LMS).

2. Communication switching system according to Claim 1, characterized by the processing modules of the control sequence of the basic call controller (BRS) having such a structure that, after interruption of the processing module sequence, initiation of the continuation of the sequence by the facility system (LMS) is possible at an event generation point.

3. Communication switching system according to Claim 1 or 2, in which state transitions of the individual state machines can be triggered by stimuli from the subscriber and by messages within the basic switching system (BVS) - for example from the state machine of the other connection in each case, characterized in that the facility system initiates, by inducing an internal message at one of the state machines, the treatment of the call objects (RO) which have been influenced.

4. Communication switching system according to Claim 1, 2 or 3, characterized in that the facility system can access the database (DB) with the aid of facility control modules (LM-SB) and can initiate the treatment of the call objects (RO) which have been influenced.

## Revendications

1. Système de commutation de communications, constitué d'un système de service complémentaire (LMS) et d'un système de commutation de base (BVS), le système de commutation de base (BVS) comportant une commande d'appel de base (BRS) pour la commande d'un appel entre deux abonnés à partir de deux connexions communiquant par l'intermédiaire de messages et ayant chacune un automate d'états associé, une base de données (DB) contenant des objets d'appel (RO) et plusieurs modules de commande de service complémentaire (LM-SB) côté commutation sous forme de fonctions pouvant être appelées pour influencer des objets d'appel selon les besoins,
caractérisé par le fait qu'aussi bien la commande d'appel de base (BRS) que les modules de commande de service complémentaire (LM-SB) peuvent accéder à la base de données (DB) et que, dans la séquence de commande de la commande d'appel de base (BRS), un module de traitement spécial est associé à chaque type de message pour permettre une initialisation du traitement des objets d'appel influencés (RO), en utilisant les blocs de traitement de la séquence de commande de la commande d'appel de base (BRS), par le système de service complémentaire (LMS).

2. Système de commutation de communications selon la revendication 1, caractérisé par une structure des modules de traitement de la séquence de commande de la commande d'appel de base (BRS) telle que, après l'interruption de l'exécution du module de traitement à un point de génération événement, le système de service complémentaire (LMS) peut initialiser la poursuite de l'exécution.

3. Système de commutation de communications selon la revendication 1 ou 2, dans lequel des transitions entre états des automates d'états individuels peuvent être déclenchées par des activations côté abonné et par des messages à l'intérieur du système de commutation de base (BVS) - par exemple issus de l'automate d'états de l'autre connexion -, caractérisé par le fait que le système de service complémentaire initialise le traitement des objets d'appel influencés (RO) en déclenchant un message interne vers un des automates d'états.

4. Système de commutation de communications selon la revendication 1, 2 ou 3, caractérisé par le fait que le système de service complémentaire peut accéder à l'aide de modules de commande de service complémentaire (LM-SB) à la base de données (DB) et peut initialiser le traitement des objets d'appel influencés (RO).
